# EUROPEAN PATENT SPECIFICATION

(11) **EP 3 956 589 B1**
(45) Date of publication and mention of the grant of the patent: **13.05.2026**
(21) Application number: 20735106.5
(22) Date of filing: 23.06.2020
(51) Int. Cl.: F16K 11/044, F16K 11/02

(54) **SEALING SYSTEM FOR SWITCHABLE WATER VALVES**
DICHTUNGSSYSTEM FÜR SCHALTBARES WASSERVENTIL
SYSTÈME D'ÉTANCHÉITÉ POUR VANNES D'EAU COMMUTABLES

(30) Priority: 26.06.2019 DE 102019117272
(43) Date of publication of application: 23.02.2022
(73) Proprietor: Johnson Electric Germany GmbH & Co. KG, 01257 Dresden (DE)
(72) Inventor: KURTZ, Andreas, Shatin, N.T. (HK); HOWACK, Gerd, Shatin, N.T. (HK); PILZ, Henry, Shatin, N.T. (HK)
(74) Representative: Doherty, William
(86) International application number: PCT/EP2020/067421
(87) International publication number: WO 2020/260233

(56) References cited:
- EP-A2- 2 184 520

## Description

The invention relates to an optimized low-noise sealing system for switchable water valves for use in heating appliances and water heaters, in particular for two-way or three-way water valves.

In domestic heating appliances or water heaters, in particular in the field of gas-fuelled boilers, a variety of different valve types are known which interrupt and, as needed, redirect the water flow for water circuits. Generally, the valves are fully open or fully closed. Preferably, electromechanically actuated two-way valves or three-way valves are used here. These valves must be designed such that inside them there is no significant pressure drop during water flow and leakage can be reliably excluded in the valve area within the water circuits over the whole temperature range in which they are operated. To be able to avoid leakage, elastically deformable materials are used as sealing bodies, on which a specific pressure force must then be exerted so that the material can be deformed within specific limits in order to ensure the required tightness over extended periods despite multiple switching cycles. On the other hand, the forces acting on the valve body should not be too large because this involves high energy consumption. The electromechanical drives should thus not be dimensioned too large to be able to use cost-efficient drives. Since these are mass products, even small savings result in big economic effects. In principle, there are two solution approaches. On the one hand, there are valves with a hollow cylindrical valve closure system or with spherical valve spaces and matching spherical valve bodies for sealing the valve. At the moment of sealing, a pressure surge occurs in the valve, causing a loud noise which in turn is transmitted through the connected piping system and considered as disturbing. A mixing valve according to the three-way principle with a cylindrical valve closure, which is guided in a bush in a linearly moveable manner, is known from DE 20 2011 004 433 U1. In this valve, the cylindrical valve body is disposed in a mixing chamber such that it shuts off or opens variable proportions of the cross-section of two inlet pipes. Here, the valve spool is made of stainless steel and the valve body is guided in a bush of a carbon-graphite material in a form-fitting manner. This design is costly and is difficult to be manufactured automatically in large series because what matters here are the precise fit of the individual valve components relative to each other and the precise seating of the valve spool.

DE 697 18 317 T2 describes a somewhat more spherical sealing body, which is supposed to offer an improved valve arrangement for heating systems and water heaters with greater leak-proof capacity. The sealing body described here is a kind of sealing ball of a cylindrical metal body, which in turn must be moved into cylindrical sealing surfaces. To prevent leakage, a side ring (acting as the actual sealing ring) is disposed inside the valve body to be compressed radially in order to ensure tightness. This design is also intended to avoid any contamination or deposits inside the valve body or to ensure that these have no influence on the tightness of the valve. The disadvantage of this solution is a relatively long travel path for the sealing body because it must be displaced quite a long way into the cylindrical sealing surfaces of the valve seats and as far until the central side ring (sealing ring) can produce its effect. Furthermore, this solution is characterized by the use of expensive materials and the relatively complex manufacture of the sealing body, i.e. manufacture is hard to automate.

An electromechanically operated three-way valve with two valve seats is known from DE 10 2012 219 745 A1, wherein a single valve seal is disposed to be moved towards a valve seat with a minimal area to seal it appropriately. The sealing surfaces of the valve body are tapered such that the sealing body lies flat against them. The valve stem closing element is smaller in diameter than the mean inner diameter of the valve body portion. This has the advantage that only the areas lying against the valve surfaces are stressed. The sealing body is guided axially at two opposite points inside the valve body so that it cannot cant or lie against the engaged valve seat in an off-centre position, i.e. in a slantwise manner. This, however, increases the flow resistance to the flowing fluid. It is also disadvantageous that any deformations of the sealing body, e.g. when the sealing body has been pressed on one side against one of the valve seats for a very long time, can potentially affect leakage in the sealing position in the other position.

EP2184520A2 discloses a valve. The valve has a piston-shaped valve control element which is moved in an axial direction between a closed position and an opened position, in order to lock or to open the flow between the two channels. The valve control element has an inner passage which connects both the channels by the closed valve control element, if the pressure in the inlet channel exceeds a defined value.

The object of the invention is to create an optimized, particularly low-noise sealing system for switchable water valves for use in heating appliances and water heaters which is constructively simple, comprises of very few components with minimal material usage, can be assembled very fast in an automated way, has a low flow resistance in the open state, has no leakage in either valve position and has a long service life.

The advantage of the optimized low-noise sealing system according to the invention for switchable water valves for use in heating appliances and water heaters is that it is constructively very simple and comprises of very few components. This allows its fast and automated manufacture. Moreover, it has such a sealing effect that in this type of water valves, to which pressures up to 4 bar and more are permanently applied, no leakage occurs in both valve positions over a long period of time when it is used in a two- or three-way water valve. Moreover, due to the constructive design as compared with previous comparable two- or three-way water valves, the flow resistance and valve noise are reduced further. The travel path of the valve actuating rod with the two sealing rings can also be shortened since the axial swelling of the sealing rings could also be shortened. Moreover, material usage as compared with other sealing bodies is reduced so that the economy of the water valve improves. With the sealing system according to the invention, it is also possible to operate with the same or higher contact pressures of the sealing body against the sealing surfaces of the valve body. Moreover, different sealing surface geometries inside the valve body can be realized in a simple manner depending on the special application case. The sealing system for switchable water valves is configured as a three-way water valve with a stepper motor drive. This stepper motor is disposed outside at a cartridge, which is inserted into the valve body and seal-connected to it. The linear displacement of the complete sealing body is effected by a valve actuating rod, which is guided through the cartridge. The sealing body is disposed directly on the valve actuating rod and joined to it. Generally, it is overmoulded directly on the valve actuating rod. However, it can also be shrink-fitted as a separate component, e.g. on the valve actuating rod, or be disposed in any other way, such as connected in a mechanically displaceable manner. The sealing body on the valve actuating rod comprises of a sealing body main part on which one or two or several disc-shaped central ribs are disposed. The sealing body main part has two press-fitted specially shaped sealing rings of the O-ring type spaced a defined distance from each other by the one or two central rib(s). These two sealing rings are fixed in their positions by two circumferential flange ribs formed at each outer end of the sealing body main part and either indented or continuous in the area of the flow bypasses. Since the small sealing rings of the O-ring type swell less than the previously known larger sealing bodies, the stepper motor must travel fewer steps at the stop to ensure tightness.

The sealing rings are shaped such that a cavity is formed at the back of the sealing rings between the rear sealing surface of the sealing rings and the one or two central ribs and the sealing body surface. This cavity allows the sealing ring to make better contact with the sealing surfaces of the sealing body main part, i.e. with the central rib. This allows leakage to be largely excluded along the rear sealing paths between the sealing body main part and the rear sealing surface (i.e. the rear surface) of the sealing rings. Instead of a single wider central rib to space the seals from each other and fix them on the sealing body main part, preferably two central ribs can be disposed and formed on the sealing body main part. The width of the central rib or the distance of the two or several central ribs to each other is determined by the internal dimensions of the valve seats to be sealed, i.e. by the distance of the respective sealing surfaces of the valve body. Since the flow direction of the fluid flowing through the water valve is advantageously identical with the direction of valve movement, this result in the whole sealing body being sucked onto the valve seat of the valve body. However, an opposite flow direction is also possible. This suction causes a pressure surge which results in a clearly audible noise in the hydraulic water system. This noise is prevented by one or more axial flow bypasses being disposed as recesses in the area of the sealing rings underneath said rings in the sealing body shank of the sealing body main part. However, instead of the axial flow bypasses in the sealing body main part, these axial flow bypasses may also be disposed in the sealing ring itself. During the valve closing process, these flow bypasses cause an afterflow decreasing with time such that full closure (sealing) of the water valve is time-shifted, i.e. the pressure surge and the inevitably produced noise are reliably prevented. Viewed in cross-section, these axial groove-like flow bypasses are advantageously shaped like circle segments or also like rectangles. To ensure that the flow bypasses are initially open and effective, a circumferential rib indented in the area of the flow bypasses or formed continuously is disposed on the main body shank at or in the immediately adjacent area of the central rib(s). These space the sealing rings from the sealing surface and allow water to flow through until the sealing rings lie against the sealing surface of the valve body and the respective sealing ring is pressed against the sealing surface of the central rib(s) by the movement of the sealing body main part, and finally seal the one or other outlet in their respective sealing position. The two sealing rings are fixed in their positions and secured against slipping on the surface of the sealing body main part by indented or continuous ribs disposed on a main body shank of the sealing body main part at or immediately proximate to the area of the central rib(s) and circumferential indented or continuous flange ribs formed at the outer ends on the sealing body main part.

It is particularly advantageous if the sealing body main part of the sealing system has three or four flow bypasses disposed as recesses in a radially symmetrical manner in the area of the sealing rings. Besides prevention of the pressure surge, these cause centred approaching of the sealing body to the valve seat of the valve body, preventing abrupt suction of the seal because water can initially still flow through the water valve via the flow bypasses although the front sealing surface already makes close and sealing contact before the rear sealing surface is also pressed sealingly against the sealing surface of the central rib by the axial actuating movement of the sealing body main part.

In an advantageous embodiment, the innovative sealing system has a reducing ring formed and materially connected or disposed separately axially outwardly on one or advantageously on both sides in the direction of the sealing surfaces in addition to the partly indented or continuous flange ribs of the sealing body main part. The reducing ring allows the flow characteristic of the flowing water to be accurately influenced.

In another reducing ring design, the sealing system for switchable water valves may have a specially shaped reducing ring flange or cone formed or disposed axially outwardly on the reducing ring towards the sealing areas. This reducing flange or cone also improves the flow characteristic.

It is a considerable advantage if a sealing system for switchable water valves that advantageously has two formed central ribs spaced from each other has a central recess between the two central ribs. This reduces both material usage and the mass to be moved by the stepper motor. In addition, this has advantages with regard to the dimensional stability of the sealing body main part if, for instance, it is to be manufactured as an injection-moulded component.

In particular, in the novel sealing system for switchable water valves, the sealing body main part with the central ribs, if designed as a single piece, is formed as a single injection moulded plastic part manufactured in a single operation.

It is a further advantage if two or more cavities are formed inside the sealing body main part of the sealing system. This reduces the mass of the sealing body main part to be moved as well as allows the different wall thicknesses including the related dimensional stability of the sealing body main part to be set more precisely.

However, it is also possible for special embodiments of the sealing system for switchable water valves, to design the sealing body main part with one central rib or with two or more central ribs or the reducing ring or the reducing ring or cone in multiple pieces. This can offer, e.g., constructive or manufacturing advantages.

It is also an advantage if on the sealing system for switchable water valves the sealing rings of the O-ring type are inserted and press-fitted in the sealing body main part under a defined pre-tension. This can be achieved in a simple manner by the inner diameter of the sealing rings being somewhat smaller than the outer diameter of the main part shank of the sealing body main part in the area of the valve seat.

For reasons of mounting and, as the case may be, repair, the sealing system for switchable water valves is preferably designed such that the sealing body main part is coupled with the valve actuating rod at a specific coupling point. This coupling point is configured e.g. as a solid body joint or a ball-and-socket joint.

In this universal sealing system, it is also possible to have contours of the sealing rings of the O-ring type that are configured and shaped to match the contours of the sealing areas of the valve body of the two-way or three-way water valve. As needed, these sealing areas can be configured, e.g. angular, with a smaller or larger radius, planar or planar with serrations. Accordingly, the contours of the sealing rings are adapted to them on their front sealing surface.

Moreover, the two sealing areas of the valve body or also their contours can be configured differently in the sealing system of the two- or three-way valve.

The invention shall be explained in detail in one exemplary embodiment by reference to Figures 1 to 4.
- Fig. 1: shows a sectional view through a complete sealing body with an injection-moulded valve actuating rod,
- Fig. 2: shows a three-dimensional, partly cut-open representation of a complete one-piece switchable sealing body main part with four cavities,
- Fig. 3: shows a three-dimensional, partly cut-open representation of a complete multi-piece switchable sealing body main part,
- Fig. 4: shows a sectional view of a complete switchable water valve with the built-in sealing body according to the invention.

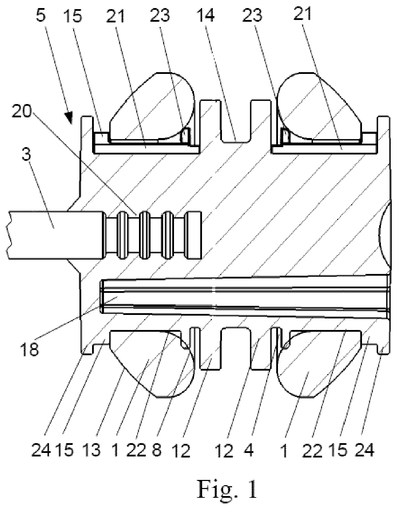

Fig. 1 shows a sectional view of a complete sealing body 5 with a valve actuating rod 3 coupled to it. The complete sealing body 5 comprises of a sealing body main part 2 with two press-fitted sealing rings 1 and the coupled valve actuating rod 3. Here, the sealing body main part 2 is configured as a one-piece injection-moulded part and, during injection moulding, the valve actuating rod 3 is directly overmoulded at the same time and thus firmly coupled to the sealing body main part 2 in the same operation. However, the sealing body main part 2 can also be coupled with the valve actuating rod 3 by a detachable connection at the coupling point 20, e.g. by means of a ball-and-socket joint. For reasons of mounting and, as the case may be, repair, the sealing system for switchable water valves is preferably designed such that the sealing body main part 2 is coupled with the valve actuating rod 3 at a specific coupling point 9. This coupling point 9 is configured e.g. as a solid body joint or a ball-and-socket joint. In this embodiment, three cavities 18 are distributed radially symmetrically in the sealing body main part 2. This reduces both the mass of the sealing body main part to be moved as and the wall thicknesses. In addition, this allows the related dimensional stability of the sealing body main part 2 to be set more precisely. In the centre of the sealing body main part 2, two disc-shaped central ribs 12 are disposed spaced from each other. A special recess 14 is formed between the central ribs 12. This reduces the mass to be moved which the preferably coupled linear stepper motor 7 must move at each travel operation, which has a positive effect on its service life. The sealing body main part 2 has two specially shaped sealing rings 1 of the O-ring type press-fitted to it under pre-tension from the outside and spaced a defined distance from each other by the two central ribs 12. These two sealing rings 1 are fixed in their positions by two circumferential flange ribs 15 formed at each outer end on the sealing body main part 2 and secured against slipping on the surface of the sealing body main part 2. Since the small sealing rings 1 of the O-ring type also swell less than previously known larger sealing bodies, the linear stepper motor 7 must travel fewer steps at the stop to ensure tightness. As an outer end termination, two reducing rings 24 are injection-moulded along with the other parts, whose diameters are larger than the diameter of the circumferential flange ribs 15, in this embodiment of an indented design. By means of the dimension and shape of these reducing rings 24, it is possible to accurately set the flow characteristic within the valve body 17. The valve body 17 has an inlet 16 which allows water to enter thereof. The drive disposed at the cartridge 6 comprises of a linear stepper motor 7 and a spindle-nut system (not drawn) designed to be self-locking so that the required contact pressure of the sealing rings 1 to the sealing areas 10 of the valve body 17 at rest is permanently ensured. The sealing system for switchable water valves is configured as a three-way water valve 11 with the stepper motor 7 drive. The two sealing rings 1 are shaped such that a cavity 4 is formed at the back of each of the sealing rings 1 between the rear sealing surface 8 of the sealing rings 1 and the sealing surfaces of the two central ribs 12 and the surfaces of the sealing body main part 2. This cavity 4 allows the sealing ring 1 to make better contact with the sealing surfaces of the sealing body main part 2. This allows leakage to be largely excluded along the rear sealing paths between the sealing body main part 2 with the central rib 12 and the rear sealing surface 8 of the sealing rings 1. The width of the central ribs 12 or the distance of the two central ribs 12 to each other is determined by the internal dimensions of the valve seats to be sealed and by the contact pressure applied by the linear stepper motor 7 to press the sealing rings 1 against the sealing areas 10 of the valve body 17 in the closed position, i.e. by the distance of the respective sealing areas 10 of the valve body 17. Although the pre-tension of the sealing rings 1 slackens over time under the effect of temperature, in particular when used in hot water circuits, tightness in this water valve design can be ensured over a very long period of time, e.g. by self-locking. Moreover, in case of wear, it is possible to repair the two- or three-way valve quickly after it has been demounted, by removing the cartridge 6 and replacing the sealing body 5 very fast with just a few manipulations in order to re-establish the required tightness of the water valve. In the area of the sealing rings 1 underneath said rings, four axial flow bypasses 21 are disposed as recesses in the sealing body shank 22 of the sealing body main part 2. During the valve closing process, these flow bypasses 21 cause an afterflow decreasing with time such that full closure (sealing) of the water valve is time-shifted, i.e. the pressure surge and the inevitably produced noise are reliably prevented. Viewed in cross-section, these axial groove-like flow bypasses 21 are shaped like round, groove-like recesses. To ensure that the flow bypasses are initially open and effective, circumferential ribs 23 indented in the area of the flow bypasses 21 are disposed on the main body shank 22 at or in the immediately adjacent area of the central rib(s) 12. These space the sealing rings 1 from the sealing surface and allow water to flow through the bypasses until the sealing rings 1 lie against the sealing surface of the valve body 17 and the sealing rings 1 are pressed against the sealing surface of the central ribs 12 by the movement of the sealing body main part 2 and finally seal the one or other outlet 19 in their respective sealing position.

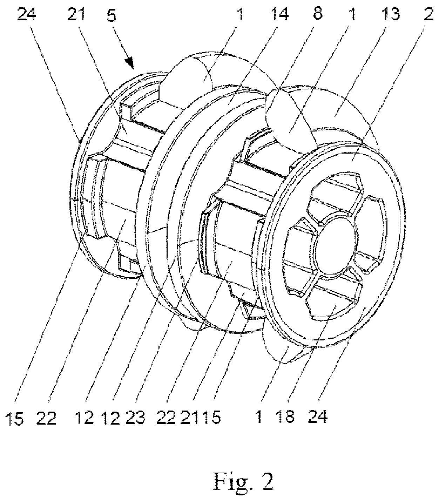

Fig. 2 shows a three-dimensional, partly cut-open representation of a complete one-piece switchable sealing body main part 2 for a two- or three-way valve 11, having four cavities 18 for the greatest possible reduction of mass. The two sealing rings 1 is shown cut open to show the round, groove-like recess of the four flow bypasses 21. Each of these extends over the whole length of the two main body shanks 22, i.e. the two circumferential indented ribs 23 and the circumferential indented flange ribs 15 are open in these places. If necessary, the circumferential open ribs 23 and the circumferential open flange ribs 15 can also be of a continuous design in the area of the flow bypasses 21, i.e. these are then designed as tunnel-like openings. In proximity to the sealing surfaces of the two central ribs 12, which are spaced a defined distance from each other by an intermediate recess 14 for reasons of weight, circumferential indented ribs 23 are formed on the main body shank 22 for spacing the sealing rings 1 from the sealing surfaces of the central ribs 12. The distance of the indented circumferential ribs 23 to the central ribs 12 can be one to several millimetres depending on the construction size. This ensures that the flow bypasses 21 are open until the sealing rings 1 with their rear sealing surface 8 (contour with circumferential radius) are pressed against the flat sealing surface of the respective central rib 12 to make sealing contact by movement of the complete sealing body 5 after the front sealing surface 13 (contour with slanted (or slightly arched or convex) cone surface) has contacted the respective engaged sealing surface of the valve body 17. As an outer termination, two reducing rings 24 are injection-moulded along with the other parts, whose diameter is larger than the diameter of the circumferential indented flange ribs 15. These two reducing rings 24 disposed axially on the far left and right serve to adjust the flow characteristic within valve body 17 (here integrated into the injection-moulded part as a single piece). At the position where the sealing rings 1 lie against the circumferential ribs 23, the sealing rings can be provided with a circumferential recess.

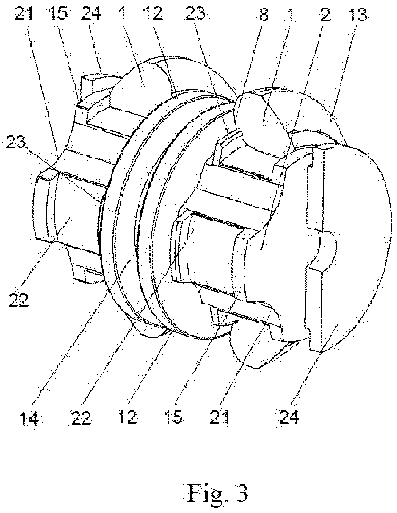

Fig. 3 shows a three-dimensional, partly cut-open representation of a complete multi-piece, more solid switchable sealing body main part 2 without additional cavities 18. In this illustration, both the two sealing rings 1 and the reducing rings 24 are shown cut open to show the round groove-like recesses of the four bypasses 21. In addition, by making the cross-section area of the sealing rings 1 visible, both the shape of the rear sealing surface 8 of the sealing ring 1 as a contour of a peripheral radius and of the front sealing surface 13 of the sealing ring 1 as a contour of a slanted or slightly arched or convex cone surface are more clearly visible.

Each of these extends over the whole length of the main body shank 22, i.e. the circumferential rib 23 and the circumferential flange ribs 15 are recessed in their circumference at the positions where the flow bypasses 21 are disposed. Optionally, the sealing body main part 2 can optionally be of a one-piece or a multi-piece design. The reducing rings 24 are separately secured to the sealing body main part 2 in an appropriate manner.

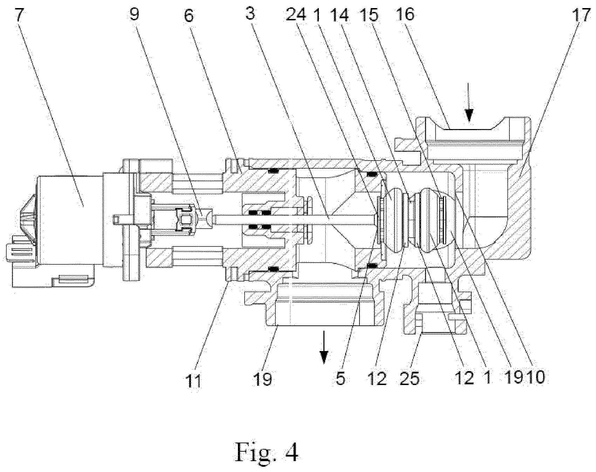

Fig. 4 shows a sectional view of a complete switchable three-way water valve 11 with a built-in sealing body 5 according to the invention and its whole structure. The complete sealing body 5 comprises of a sealing body main part 2 with two press-fitted sealing rings 1 and the coupled valve actuating rod 3. Preferably, the sealing body main part 2 is configured as a one-piece injection-moulded part and, during injection moulding, the valve actuating rod 3 is directly overmoulded at the same time and thus firmly coupled to the sealing body main part 2 in the same operation. In this embodiment, three cavities 18 (not shown) are distributed radially symmetrically in the sealing body main part 2. This reduces the mass of the sealing body main part 2 to be moved as well as allows the wall thicknesses including the related dimensional stability of the sealing body main part 2 to be set more precisely. In the centre of the sealing body main part 2, two disc-shaped central ribs 12 are disposed spaced from each other. A special recess 14 is formed between the central ribs 12. This reduces the mass to be moved which the coupled linear stepper motor 7 must move at each travel operation, which has a positive effect on its service life. The sealing body main part 2 has two specially shaped sealing rings 1 of the O-ring type press-fitted to it under pre-tension from the outside and spaced a defined distance from each other by the two central ribs 12. These two sealing rings 1 are fixed in their positions by two circumferential indented flange ribs 15 formed at each outer end on the sealing body main part 2 and secured against slipping on the surface of the sealing body main part 2. Since the small sealing rings 1 of the O-ring type also swell less than previously known larger sealing bodies, the linear stepper motor 7 must travel fewer steps at the stop to ensure tightness. As an outer termination, two reducing rings 24 are injection-moulded along with the other parts, whose diameter is larger than the diameter of the circumferential flange ribs. By means of the dimension and shape of these reducing rings 24, it is possible to accurately set the flow characteristic within the valve body 17.

The water valve drive disposed at the cartridge 6 comprises of a linear stepper motor 7 and a spindle-nut system (not drawn) designed to be self-locking so that the required contact pressure of the sealing rings 1 to the respective sealing areas of the valve body 17 at rest is ensured. The two sealing rings 1 are shaped such that a cavity 4 is formed at the back of each of the sealing rings 1 between the rear sealing surface 8 of the sealing rings 1 and the two central ribs 12 and the surfaces of the sealing body main part 2. This cavity 4 allows the sealing ring 1 to make better contact with the sealing surfaces of the central ribs 12. This allows leakage to be largely excluded along the rear sealing paths between the sealing body main part 2 with the central rib 12 and the rear sealing surface 8 of the sealing rings 1. The width of the central ribs 12 or the distance of the two central ribs 12 to each other is determined by the internal dimensions of the valve seats to be sealed and by the contact pressure applied by the linear stepper motor 7 to press the sealing rings 1 against the sealing areas 10 of the valve body 17 in the closed position, i.e. by the distance of the respective sealing areas 10 of the valve body 17. Although the pre-tension of the sealing rings 1 slackens over time, in particular when used in hot water circuits, tightness in this water valve design can be ensured over a very long period of time, e.g. by self-locking. Moreover, in case of wear, it is possible to regenerate the three-way valve 11 quickly after it has been demounted, by removing the cartridge 6 and replacing the sealing body 5 very fast with just a few manipulations in order to re-establish the required tightness of the water valve. In the area of the sealing rings 1 underneath said rings, four axial flow bypasses 21 are disposed as recesses in the sealing body shank 22 of the sealing body main part 2. During the valve closing process, these flow bypasses 21 cause an afterflow decreasing with time such that the full closure (sealing) of the water valve is time-shifted, i.e. the pressure surge and the inevitably produced noise are reliably prevented. Viewed in cross-section, these axial groove-like flow bypasses 21 are preferably shaped like round, groove-like recesses here. To ensure that the flow bypasses 21 are initially open and effective, circumferential ribs 23 indented in the area of the flow bypasses 21 are disposed on the main body shank 22 at or in the immediately adjacent area of the central ribs 12. These space the sealing rings 1 from the sealing surface of the central rib and allow water to flow through until the sealing rings 1 lie against the sealing surface of the valve body 17 and the sealing rings 1 are pressed against the sealing surface of the central ribs 12 by the movement of the sealing body main part 2 and finally seal only one or both outlets 19 in their respective sealing position.

The second outlet 19 is disposed towards the rear. The cartridge 6 which inserted into the valve body 17 and also reliably seal-connected to it and mounted together with a ring seal. The conduct of the valve actuating rod 3 is also sealed against the water-conducting valve space by a suitable sealing design. In addition, a separate sensor access 25 is disposed here, which can be fitted with various sensors (for example temperature or pressure sensors) or otherwise be closed tight.

The technical solution described above is primarily usable in a novel very low-noise, economic sealing system for switchable water valves for use in heating appliances and water heaters, specifically for two-way or three-way water valves.

### List of reference symbols

- 1: Sealing ring
- 2: Sealing body main part
- 3: Valve actuating rod
- 4: Cavity
- 5: Sealing body
- 6: Cartridge
- 7: Linear stepper motor
- 8: Rear sealing surface (e.g. contour with a peripheral radius)
- 9: Coupling point of the linear stepper motor
- 10: Sealing areas of the valve body (front sealing path leakage)
- 11: Two-way or three-way water valve
- 12: Central rib
- 13: Front sealing surface (e.g. contour with slanted (slightly curved, convex) conical surface
- 14: Recess
- 15: Indented or continuous circumferential flange rib
- 16: Inlet
- 17: Valve body
- 18: Cavities
- 19: Outlets
- 20: Coupling point between sealing body and valve actuating rod
- 21: Flow bypass
- 22: Main body shank
- 23: Indented or continuous circumferential rib
- 24: Reducing ring
- 25: Sensor access

## Claims

1. A sealing system for switchable water valves, having a valve actuating rod (3), a cartridge (6), a linear stepper motor (7), and a valve body (17), the sealing system comprising a drive by means of the linear stepper motor (7) disposed at the cartridge (6) and adjustment by means of the valve actuating rod (3) and a sealing body (5) disposed in the valve body (17),
the sealing body (5) comprising a sealing body main part (2) with at least one central rib (12) is disposed on the valve actuating rod (3),
two sealing rings (1) spaced a defined distance from each other are press-fitted on the sealing body main part (2), and
one or more axial flow bypasses (21) are disposed as recesses in the sealing body main part (2) underneath said sealing rings (1) or in the sealing rings (1) themselves;
**characterized in that** the two sealing rings (1) are fixed in their positions by two circumferential indented or continuous flange ribs (15) formed at each outer end on the sealing body main part (2) and are secured against slipping on the surface of the sealing body main part (2) wherein an indented or continuous rib (23) is disposed on a main body shank (22) at or immediately proximate to the area of the central rib or ribs (12) for spacing the sealing rings (1) from the sealing surfaces of the central rib or ribs (12)

2. The sealing system for switchable water valves according to claim 1, **characterized in that** said one or more axial flow bypasses comprise three or more axial flow bypasses (21) disposed as recesses in the sealing body main part (2) in the area of the sealing rings (1).

3. The sealing system for switchable water valves according to claim 1 or 2,
**characterized in that** a reducing ring (24) is formed and disposed on the flange ribs (15) of the sealing body main part (2) axially outwardly on one or both sides in the direction of the sealing areas of the valve body (17).

4. The sealing system for switchable water valves according to claim 3, **characterized in that** a reducing ring flange or cone is formed and disposed on the reducing ring (24) axially outwardly towards the sealing areas of the valve body (17).

5. The sealing system for switchable water valves according to any of the claims 1 to 4, **characterized in that,** when viewed in cross-section, the axial flow bypasses (21) are designed to be half open or open, or individual ones are designed half open and the others open or are designed half open and open in alternation.

6. The sealing system for switchable water valves according to any of the claims 1 to 5, **characterized in that** in the case of two central ribs (12), a central recess (14) is formed in the sealing body main part (2) between the two central ribs (12).

7. The sealing system for switchable water valves according to any of the claims 1 to 6, **characterized in that** the sealing body main part (2) with the central ribs (12) is formed as a one-piece injection moulded plastic part.

8. The sealing system for switchable water valves according to any of the claims 1 to 6, **characterized in that** the sealing body main part (2) with the central ribs (12) is formed in multiple parts.

9. The sealing system for switchable water valves according to any of the claims 1 to 8, **characterized in that** one, two or more cavities (18) are formed inside the sealing body main part (2).

10. The sealing system for switchable water valves according to any of the claims 1 to 9, **characterized in that** the sealing rings (1) are inserted in the sealing body main part (2) under a defined pre-tension by the inner diameter of the sealing rings (1) being somewhat smaller than the outer diameter of the sealing body main part (2) in the area of the valve seat .

11. The sealing system for switchable water valves according to any of the claims 1 to 10, **characterized in that** the sealing body main part (2) is coupled with the valve actuating rod (3) at a coupling point (9), which is designed as a solid body joint or a ball-and-socket joint.

12. The sealing system for switchable water valves according to any of the claims 1 to 11, **characterized in that** the contours of the sealing rings (1) of the O-ring type are configured and shaped to match the contours of the sealing areas (10) of the valve body (17) of a two-way or three-way water valve (11).

13. The sealing system for switchable water valves according to any of the claims 1 to 11, **characterized in that** the contours of the two sealing areas (10) of the valve body (17) of a two-way or three-way water valve (11) are configured differently.

14. The sealing system for switchable water valves according to any of the claims 1 to 13, **characterized in that** a cavity (4) is formed at the back of the sealing rings (1) between a rear sealing surface (8) of the sealing rings (1) and the central rib or ribs (12).

## Patentansprüche

1. Dichtungssystem für schaltbare Wasserventile, die eine Ventilbetätigungsstange (3), eine Kartusche (6), einen Linearschrittmotor (7) und einen Ventilkörper (17) aufweisen, wobei das Dichtungssystem einen Antrieb mittels des an der Kartusche (6) angeordneten Linearschrittmotors (7) und eine Justierung mittels der Ventilbetätigungsstange (3) und eines im Ventilkörper (17) angeordneten Dichtungskörpers (5) umfasst,
wobei der Dichtungskörper (5), der einen Dichtungskörper-Hauptteil (2) mit mindestens einer zentralen Rippe (12) umfasst, auf der Ventilbetätigungsstange (3) angeordnet ist,
zwei Dichtungsringe (1), die in einem definierten Abstand zueinander beabstandet sind, auf den Dichtungskörper-Hauptteil (2) aufgepresst sind, und
ein oder mehrere axiale Strömungsumleitungen (21) als Aussparungen im Dichtungskörper-Hauptteil (2) unterhalb der Dichtungsringe (1) oder in den Dichtungsringen (1) selbst angeordnet sind;
**dadurch gekennzeichnet, dass** die beiden Dichtungsringe (1) durch zwei umlaufende, eingekerbte oder durchgehende Flanschrippen (15), die an jedem äußeren Ende des Dichtungskörper-Hauptteils (2) gebildet sind, in ihren Positionen fixiert und gegen Verrutschen auf der Oberfläche des Dichtungskörper-Hauptteils (2) gesichert sind, wobei eine eingekerbte oder durchgehende Rippe (23) an einem Hauptkörperschaft (22) im Bereich der zentralen Rippe oder Rippen (12) oder in deren unmittelbarer Nähe angeordnet ist, um die Dichtungsringe (1) von den Dichtflächen der zentralen Rippe oder Rippen (12) zu beabstanden.

2. Dichtungssystem für schaltbare Wasserventile nach Anspruch 1, **dadurch gekennzeichnet, dass** der eine oder mehrere axiale Strömungsumleitungen drei oder mehr axiale Strömungsumleitungen (21) umfassen, die als Aussparungen im Dichtungskörper-Hauptteil (2) im Bereich der Dichtungsringe (1) angeordnet sind.

3. Dichtungssystem für schaltbare Wasserventile nach Anspruch 1 oder 2, **dadurch gekennzeichnet, dass** ein Reduzierring (24) auf den Flanschrippen (15) des Dichtungskörper-Hauptteils (2) axial nach außen auf einer oder beiden Seiten in Richtung der Dichtungsbereiche des Ventilkörpers (17) gebildet und daran angeordnet ist.

4. Dichtungssystem für schaltbare Wasserventile nach Anspruch 3, **dadurch gekennzeichnet, dass** ein Reduzierringflansch oder -kegel am Reduzierring (24) axial nach außen in Richtung der Dichtbereiche des Ventilkörpers (17) gebildet und daran angeordnet ist.

5. Dichtungssystem für schaltbare Wasserventile nach einem der Ansprüche 1 bis 4, **dadurch gekennzeichnet, dass**die axialen Strömungsumleitungen (21) in der Querschnittsansicht gestaltet sind, um halb offen oder offen zu sein, oder einzelne davon halb offen und die anderen offen gestaltet sind oder abwechselnd halb offen und offen gestaltet sind.

6. Dichtungssystem für schaltbare Wasserventile nach einem der Ansprüche 1 bis 5, **dadurch gekennzeichnet, dass** im Falle von zwei zentralen Rippen (12) eine zentrale Aussparung (14) im Dichtungskörper-Hauptteil (2) zwischen den beiden zentralen Rippen (12) gebildet ist.

7. Dichtungssystem für schaltbare Wasserventile nach einem der Ansprüche 1 bis 6, **dadurch gekennzeichnet, dass** der Dichtungskörper-Hauptteil (2) mit den zentralen Rippen (12) als einteiliges spritzgegossenes Kunststoffteil gebildet ist.

8. Dichtungssystem für schaltbare Wasserventile nach einem der Ansprüche 1 bis 6, **dadurch gekennzeichnet, dass** der Dichtungskörper-Hauptteil (2) mit den zentralen Rippen (12) aus mehreren Teilen gebildet wird.

9. Dichtungssystem für schaltbare Wasserventile nach einem der Ansprüche 1 bis 8, **dadurch gekennzeichnet, dass** im Dichtungskörper-Hauptteil (2) ein, zwei oder mehrere Hohlräume (18) gebildet sind.

10. Dichtungssystem für schaltbare Wasserventile nach einem der Ansprüche 1 bis 9, **dadurch gekennzeichnet, dass** die Dichtungsringe (1) unter einer definierten Vorspannung durch den Innendurchmesser der Dichtungsringe (1) in den Dichtungskörper-Hauptteil (2) eingesetzt werden, der im Bereich des Ventilsitzes etwas kleiner ist als der Außendurchmesser des Dichtungskörper-Hauptteils (2).

11. Dichtungssystem für schaltbare Wasserventile nach einem der Ansprüche 1 bis 10, **dadurch gekennzeichnet, dass** der Dichtungskörper-Hauptteil (2) mit der Ventilbetätigungsstange (3) an einem Kupplungspunkt (9) gekoppelt ist, der als Festkörperverbindung oder Kugelgelenkverbindung gestaltet ist.

12. Dichtungssystem für schaltbare Wasserventile nach einem der Ansprüche 1 bis 11, **dadurch gekennzeichnet, dass** die Konturen der Dichtungsringe (1) vom Typ O-Ring konfiguriert und geformt sind, um den Konturen der Dichtungsbereiche (10) des Ventilkörpers (17) eines Zwei- oder Dreiwege-Wasserventils (11) zu entsprechen.

13. Dichtungssystem für schaltbare Wasserventile nach einem der Ansprüche 1 bis 11, **dadurch gekennzeichnet, dass** die Konturen der beiden Dichtungsbereiche (10) des Ventilkörpers (17) eines Zwei- oder Dreiwege-Wasserventils (11) unterschiedlich konfiguriert sind.

14. Dichtungssystem für schaltbare Wasserventile nach einem der Ansprüche 1 bis 13, **dadurch gekennzeichnet, dass** auf der Rückseite der Dichtungsringe (1) zwischen einer hinteren Dichtfläche (8) der Dichtungsringe (1) und der zentralen Rippe oder Rippen (12) ein Hohlraum (4) gebildet ist.

## Revendications

1. Système d'étanchéité pour vannes d'eau commutables, présentant une barre d'actionnement de vanne (3), une cartouche (6), un moteur pas à pas linéaire (7) et un corps de vanne (17), le système d'étanchéité comprenant un entraînement au moyen du moteur pas à pas linéaire (7) disposé au niveau de la cartouche (6) et un réglage au moyen de la barre d'actionnement de vanne (3) et d'un corps d'étanchéité (5) disposé dans le corps de vanne (17),
le corps d'étanchéité (5) comprenant une partie principale de corps d'étanchéité (2) avec au moins une nervure centrale (12) est disposé sur la barre d'actionnement de vanne (3),
deux bagues d'étanchéité (1) espacées d'une distance définie sont emmanchées à force sur la partie principale de corps d'étanchéité (2), et
une ou plusieurs dérivations à flux axial (21) sont disposées en tant que cavités dans la partie principale de corps d'étanchéité (2) sous lesdites bagues d'étanchéité (1) ou dans les bagues d'étanchéité (1) elles-mêmes ;
**caractérisé en ce que** les deux bagues d'étanchéité (1) sont fixées dans leurs positions par deux nervures de bride circonférentielles en retrait ou continues (15) formées au niveau de chaque extrémité extérieure sur le bac principal de corps d'étanchéité (2) et sont maintenues contre le glissement sur la surface du bac principal de corps d'étanchéité (2), dans lequel une nervure en retrait ou continue (23) est disposée sur une tige de corps principal (22) au niveau ou immédiatement à proximité de la zone de la ou des nervures centrales (12) pour espacer les bagues d'étanchéité (1) des surfaces d'étanchéité de la ou des nervures centrales (12).

2. Système d'étanchéité pour vannes d'eau commutables selon la revendication 1, **caractérisé en ce que** lesdites une ou plusieurs dérivations à flux axial comprennent trois dérivations à flux axial (21) ou plus disposées en tant que cavités dans la partie principale de corps d'étanchéité (2) dans la zone des bagues d'étanchéité (1).

3. Système d'étanchéité pour vannes d'eau commutables selon la revendication 1 ou 2, **caractérisé en ce qu'**une bague de réduction (24) est formée et disposée sur les nervures de bride (15) de la partie principale de corps d'étanchéité (2) axialement vers l'extérieur sur un ou les deux côtés dans la direction des zones d'étanchéité du corps de vanne (17).

4. Système d'étanchéité pour vannes d'eau commutables selon la revendication 3, **caractérisé en ce qu'**une bride ou un cône à bague de réduction est formé et disposé sur la bague de réduction (24) axialement vers l'extérieur vers les zones d'étanchéité du corps de vanne (17).

5. Système d'étanchéité pour vannes d'eau commutables selon l'une quelconque des revendications 1 à 4, **caractérisé en ce que,** vues en coupe transversale, les dérivations à flux axial (21) sont conçues pour être à moitié ouvertes ou ouvertes, ou certaines sont conçues à moitié ouvertes et les autres ouvertes ou sont conçues à moitié ouvertes et ouvertes en alternance.

6. Système d'étanchéité pour vannes d'eau commutables selon l'une quelconque des revendications 1 à 5, **caractérisé en ce que,** dans le cas de deux nervures centrales (12), un évidement central (14) est formé dans la partie principale de corps d'étanchéité (2) entre les deux nervures centrales (12).

7. Système d'étanchéité pour vannes d'eau commutables selon l'une quelconque des revendications 1 à 6, **caractérisé en ce que** la partie principale de corps d'étanchéité (2) avec les nervures centrales (12) est formée en tant que partie en plastique moulée par injection d'une seule pièce.

8. Système d'étanchéité pour vannes d'eau commutables selon l'une quelconque des revendications 1 à 6, **caractérisé en ce que** la partie principale de corps d'étanchéité (2) avec les nervures centrales (12) est formée de multiples parties.

9. Système d'étanchéité pour vannes d'eau commutables selon l'une quelconque des revendications 1 à 8, **caractérisé en ce qu'**une, deux cavités (18) ou plus sont formées à l'intérieur de la partie principale de corps d'étanchéité (2).

10. Système d'étanchéité pour vannes d'eau commutables selon l'une quelconque des revendications 1 à 9, **caractérisé en ce que** les bagues d'étanchéité (1) sont insérées dans la partie principale de corps d'étanchéité (2) sous une prétension définie par le diamètre intérieur des bagues d'étanchéité (1) qui est légèrement inférieur au diamètre extérieur de la partie principale de corps d'étanchéité (2) dans la zone du siège de vanne.

11. Système d'étanchéité pour vannes d'eau commutables selon l'une quelconque des revendications 1 à 10, **caractérisé en ce que** la partie principale de corps d'étanchéité (2) est couplée à la barre d'actionnement de vanne (3) au niveau d'un point de couplage (9) qui est conçu en tant qu'articulation à corps solide ou articulation à rotule.

12. Système d'étanchéité pour vannes d'eau commutables selon l'une quelconque des revendications 1 à 11, **caractérisé en ce que** les contours des bagues d'étanchéité (1) du type joint torique sont configurés et façonnés pour correspondre aux contours des zones d'étanchéité (10) du corps de vanne (17) d'une vanne d'eau à deux voies ou trois voies (11).

13. Système d'étanchéité pour vannes d'eau commutables selon l'une quelconque des revendications 1 à 11, **caractérisé en ce que** les contours des deux zones d'étanchéité (10) du corps de vanne (17) d'une vanne d'eau à deux voies ou trois voies (11) sont configurés différemment.

14. Système d'étanchéité pour vannes d'eau commutables selon l'une quelconque des revendications 1 à 13, **caractérisé en ce qu'**une cavité (4) est formée à l'arrière des bagues d'étanchéité (1) entre une surface d'étanchéité arrière (8) des bagues d'étanchéité (1) et la ou les nervures centrales (12).
